# EUROPEAN PATENT APPLICATION

(11) **EP 4 817 721 A1**
(43) Date of publication of application: **07.10.2026**
(21) Application number: 25168014.6
(22) Date of filing: 02.04.2025
(51) Int. Cl.: B01D 53/04, B01D 53/047

(54) **PROCESS FOR PURIFYING A GAS STREAM CONTAINING HYDROGEN**

(71) Applicant: L'AIR LIQUIDE, SOCIETE ANONYME POUR L'ETUDE ET L'EXPLOITATION DES PROCEDES GEORGES CLAUDE, 75007 Paris (FR)
(72) Inventor: KALAITZOPOULOS, Stylianos, 75007 PARIS (FR); BRANDANI, Federico, 75007 PARIS (FR)
(74) Representative: Air Liquide

(57) **Abstract**

The invention relates to a process for purifying a gas stream (GS) containing hydrogen, nitrogen, ammonia, and potentially water, in particular a gas stream exiting an ammonia cracker (10), comprising the step of passing the gas stream through a Temperature Swing Adsorption (TSA) unit (11) comprising at least three columns (C1, C2, C3), wherein two columns operate in a regeneration phase, with a regeneration gas flowing through said columns in series to release ammonia (NH□) and potentially water (H□O) adsorbed during the adsorption phase; and operating the columns (C1, C2, C3) in a cyclic manner so that each column alternates between the adsorption phase and the regeneration phase.

## Description

The present invention relates to a process for purifying a gas stream containing hydrogen, nitrogen, ammonia, and potentially water, in particular a gas stream exiting an ammonia cracker.

Hydrogen is renowned for its lightweight nature and optimal combustion properties as a fuel and its environment-friendliness during its combustion or during its electrochemical conversion, for example for a fuel cell. That is, there is no emission of any carbon dioxide (CO2), particulate or sulfur during the use of hydrogen as a fuel. This makes hydrogen a vector for the energy transition.

As a matter of fact, a hydrogen product can be produced from a cracking reaction of an ammonia as feedstock, or from an ammonia cracking reaction. In particular, a vaporized ammonia stream can be used in the ammonia cracking reaction to produce the hydrogen.

Typically, the ammonia cracking reaction takes place in an ammonia cracking reactor comprising tubes filled with catalysts and extending in a furnace. Heat is supplied to said tubes, via external firing of a fuel in said furnace, for example with a firebox supplied by the fuel.

Ammonia cracking, performed in a furnace, is an endothermic and catalytic process. The reaction yield depends on the furnace operating conditions, resulting in varying ammonia content at the outlet, ranging from a few parts per million (ppm) to a few percent (%). The NH3/H2O/N2/H2 mixture which is typically obtained from the cracking process need to be purified in order to produce a pure hydrogen stream of >99.99%

The present invention proposes a purification method in particular for streams containing high levels of ammonia, i.e. up to 3% of molar percentage level.

For this purpose, the invention proposes a process for purifying a gas stream containing hydrogen, nitrogen, ammonia, and potentially water, in particular a gas stream exiting an ammonia cracker, comprising the following steps:
- passing the gas stream through a Temperature Swing Adsorption (TSA) unit comprising at least three columns, wherein:
   o at least one column operates in an adsorption phase to remove ammonia (NH₃) and potentially water (H₂O) from the gas stream to produce a purified gas stream;
   ∘ at least two columns operate in a regeneration phase (which is a desorption), with a regeneration gas flowing through said columns in series to release ammonia (NH₃) and potentially water (H₂O) adsorbed during the adsorption phase; and
- operating the columns in a cyclic manner so that each column alternates between the adsorption phase and the regeneration phase.

The cyclic operations of the columns ensures that always at least one column is in the adsorption phase while the other columns are in the regeneration phase.

In other words, the TSA unit comprises at least three adsorption columns, each operating through a cycle of adsorption, heating, cooling phases, and the cycles of the three columns are staggered to provide a continuous purified gas stream.

The TSA unit advantageously prevents ammonia contamination by ensuring complete desorption during the regeneration phase.

The present invention provides improved efficiency in pure hydrogen production, for example by utilizing the regeneration gas from a PSA process, into the pre-treatment following the ammonia cracker. This enables the achievement of hydrogen purities greater than 99.99%.

In one embodiment of the invention, the at least two columns operating in the regeneration phase comprise an upstream column and a downstream column, and among which:
- the upstream column operating a cooling phase (for instance at substantially 40°C and 1.5 bara) to prepare the column for the next adsorption cycle, the cooling being performed by the regeneration gas;
- the downstream column operating a heating phase (for instance depending on the ammonia content of the feed between 180 and 390°C and 1.5 bara) to ensure desorption of ammonia and water.

The words "upstream" and "downstream" are defined with respect to the flow of the regeneration gas.

In an embodiment, the gas stream is substantially saturated with water.

In an embodiment, the purified gas stream exiting the column operating in the adsorption phase is sent to a Pressure Swing Adsorption (PSA) unit for hydrogen purification.

In one embodiment, the regeneration gas comprises an off-gas from the PSA unit, containing nitrogen and hydrogen.

In one embodiment, the off-gas from the Pressure Swing Adsorption (PSA) unit is produced within a pressure range of 1.45 to 1.55 bara. This is advantageous regarding the pressure drop in the Temperature Swing Adsorption (TSA) unit with flowing of the regeneration gas through two columns in series.

In one embodiment, the regeneration gas flows through the two regenerating columns without being split upstream of the upstream column. In particular, the entire regeneration gas flows through the upstream column, and subsequently, the entire regeneration gas flows through the downstream column.

In an embodiment, the adsorption phase operates at substantially 30bara and 40°C (to optimize the removal of ammonia and water).

In an embodiment, the cooling phase in the upstream column is advantageously performed by the regeneration gas coming from the Pressure Swing Adsorption (PSA) unit with a temperature significantly lower than the heating temperature of the Temperature Swing Adsorption (TSA) unit.

In an embodiment, the heating phase in the downstream column is advantageously performed by the regeneration gas which has been heated by a heating device.

In one embodiment, the cycle for a considered column includes sequentially:
- the heating phase (for instance depending on the ammonia content of the feed between 180 and 390°C and 1.5 bara to ensure desorption of ammonia and water);
- the cooling phase (for instance at substantially 40°C and 1.5 bara) to prepare the column for the next adsorption cycle;
- the adsorption phase (for instance at substantially 40°C and 30bara).

In particular, the cycle for a considered column includes sequentially:
- the adsorption phase, where the gas stream is purified by removing ammonia (NH₃) and water (H₂O);
- a depressurization phase (for instance to lower the pressure to 1.5 bara to prepare for regeneration);
- the heating phase;
- the cooling phase;
- a repressurization phase (for instance at substantially 40°C and 30 bara).

In an embodiment, the repressurization phase is performed co-currently with the gas stream exiting the ammonia cracker, prior to the adsorption phase.

In an embodiment, the regeneration gas flow in a column, in particular the regeneration gas flow in a column during said heating phase and said cooling phase, is countercurrent to the flow of the gas stream during the adsorption phase in said column.

This countercurrent flow ensures that impurities are efficiently pushed out of the adsorbent bed.

Co-current and countercurrent are defined with respect to the circulation of the gasses through a column in the adsorption phase. Co-current is the same direction of circulation than the gasses through a column in the adsorption phase and countercurrent is the opposite direction of circulation.

In an embodiment, the column in the heating phase is completely regenerated to remove all ammonia and water impurities.

Complete desorption, typically in the heating phase, prevents carryover of ammonia from an upstream not completely regenerated column in a cooling phase to a downstream column in a heating phase, through the regeneration gas. Any residual ammonia in the adsorbent could otherwise end up in the production end of a column in the heating phase and then in the cooling phase and hence potentially contaminate the purified gas stream during the next adsorption phase.

During the adsorption phase, the adsorbent gradually saturates with ammonia and water. When the adsorbent reaches its maximum saturation capacity, breakthrough occurs, potentially leading to contamination of the gas stream. The maximum saturation capacity depends on the temperature and on the partial pressure of ammonia in the feed stream.

If breakthrough occurs, ammonia may enter the downstream PSA unit, which must be avoided.

In an embodiment, to prevent ammonia carryover into the PSA unit, adsorption in the column is stopped before breakthrough occurs.

In particular, the PSA off-gas, mainly nitrogen with potentially a small proportion of hydrogen, advantageously remains free of ammonia, as it may be used as regeneration gas returning to the TSA unit.

In an embodiment, the purified gas stream exiting the column operating in the adsorption phase comprises up to 0.01 ppm of ammonia.

In an embodiment, the columns have a radial centripetal or centrifugal configuration.

In an embodiment, each column comprises an adsorbent bed with at least two layers of adsorbent.

In an embodiment, the adsorbent layers comprise:
- a first layer of activated alumina for water removal; and
- a second layer of zeolite for ammonia removal.

In an embodiment, each column comprises a feed end arranged for receiving said gas stream, a product end downstream said feed end for discharging the purified gas stream from the column, and an adsorbent bed arranged between said feed end and said product end, the adsorbent bed comprising the first layer followed downstream by the second layer.

The columns may, depending on each case, have a vertical or horizontal central axis, or may be of the radial type, that is, the gas stream to be purified flows therein either vertically (for instance in downflow), or horizontally (from left to right, or vice versa) or centripetally (radially toward the adsorber central axis) or centrifugally (radially from the central axis).

In an embodiment, the PSA unit separates the purified gas stream for producing a hydrogen enriched gas and said PSA off-gas.

The hydrogen enriched gas exiting the PSA unit is in particular a pure hydrogen stream of >99.99%.

In an embodiment, the regeneration gas exiting the TSA unit (TSA off-gas), typically rich in ammonia, is recycled to the ammonia cracker to enhance the ammonia reaction yield. Alternatively, this TSA off-gas is valorized as fuel by being directed to the furnace burners for supplying heat to the ammonia cracker.

In an embodiment, the regeneration phase releases impurities by heating the adsorbents to decrease their affinity for ammonia and water.

In an embodiment, the regeneration gas is heated by a heating device before entering the column operating the heating phase.

In an embodiment, the heating device is an electrical heater or a fuel gas heater.

In an embodiment, the columns are designed to handle a gas stream containing up to 3% ammonia.

The following embodiments are examples. Although the description refers to one or more embodiments, this does not necessarily mean that each reference relates to the same embodiment, or that the features only apply to a single embodiment. Individual features of various embodiments can also be combined or interchanged in order to create other embodiments.

### BRIEF DESCRIPTION OF DRAWINGS

Note that all of the features and configurations described above are purely examples. Other features, details and advantages of the invention will become clearer on reading the detailed description set out below, together with several embodiments provided purely as examples and by way of indication, with reference to the attached schematic drawings, in which:
Figure 1 is a schematic representation of an installation, in accordance with one embodiment of the present invention, with the first column operating in the adsorption phase and the other columns operating in the regeneration phase;
Figure 2 is a schematic representation of the of Figure 1, with the second column operating in the adsorption phase and the other columns operating in the regeneration phase;
Figure 3 is a schematic representation of the of Figure 1, with the third column operating in the adsorption phase and the other columns operating in the regeneration phase;
Figure 4 is a table illustrating the adsorption cycle in which each column alternates between the adsorption and regeneration phases;
Figure 5 is a schematic representation of an embodiment wherein the temperature swing adsorption unit comprises four columns
Figure 6 is a schematic representation of the adsorption cycle according to the embodiment of figure 5.

Throughout the description, identical elements or elements with the same function are designated by the same reference sign.

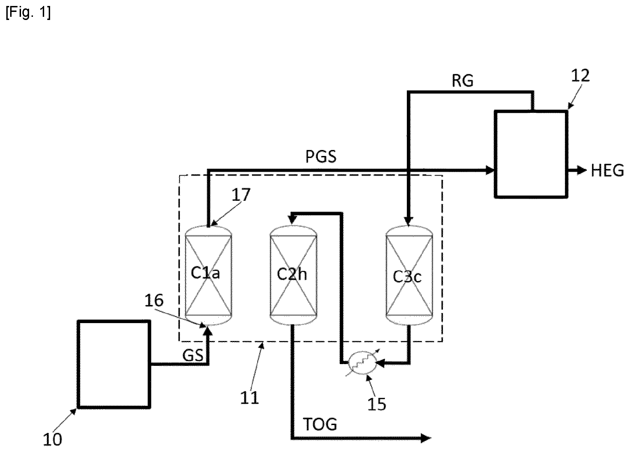

Referring to figure 1, a process for purifying a gas stream GS containing hydrogen, nitrogen, ammonia, and potentially water, is represented. Said gas stream exits an ammonia cracker 10.

The process comprises the following steps:
- passing the gas stream GS through a Temperature Swing Adsorption (TSA) unit 11 comprising three columns C1, C2, C3, wherein (in figure 1 configuration):
   ∘ one column C1a operates in an adsorption phase A to remove ammonia (NH₃) and potentially water (H₂O) from the gas stream GS to produce a purified gas stream PGS;
   ∘ two columns C2h, C3c operate in a regeneration phase H, C, with a regeneration gas RG flowing through said columns C.h, C.c in series to release ammonia (NH₃) and potentially water (H₂O) (which is a desorption) adsorbed during the adsorption phase A; and
- operating the columns C1, C2, C3 in a cyclic manner so that each column C1, C2, C3 alternates between the adsorption phase A and the regeneration phase H, C.

The references C1, C2, and C3 denote the columns of the TSA unit 11. When columns C1, C2, and C3 operate in adsorption phase A, they are noted with a subscript "a" at the end. When they are in regeneration phases H or C, the letters "h" or "c" are added to the end of the reference. For example, C1a denotes column C1 operating in adsorption phase A, and C2h denotes column C2 operating in regeneration phase H.

The cyclic operations of the columns C1, C2, C3 ensures that always at least one column is in the adsorption phase A while the other columns are in the regeneration phase H,C.

In other words, the TSA unit 11 comprises at least three adsorption columns, each operating through a cycle of adsorption A, a heating phase H and a cooling phase C, and the cycles of the three columns are staggered to provide a continuous purified gas stream PGS.

The TSA unit 11 advantageously prevents ammonia contamination by ensuring complete desorption during the regeneration phase H, C.

The present invention provides improved efficiency in pure hydrogen production by utilizing the regeneration gas RG from a PSA process into the pre-treatment following the ammonia cracker 10. This enables the achievement of hydrogen purities greater than 99.99%.

The two columns operating in the regeneration phase comprise an upstream column and a downstream column, and among which:
- the upstream column C1c (or C2c or C3c) operating a cooling phase C (for instance at substantially 40°C and 1.5 bara) to prepare the column for the next adsorption cycle, the cooling being performed by the regeneration gas RG;
- the downstream column C1h (or C2h or C3h) operating a heating phase H (depending on the ammonia content of the feed between 180 and 390°C and 1.5 bara) to ensure desorption of ammonia and water.

The words "upstream" and "downstream" are defined with respect to the flow of the regeneration gas RG.

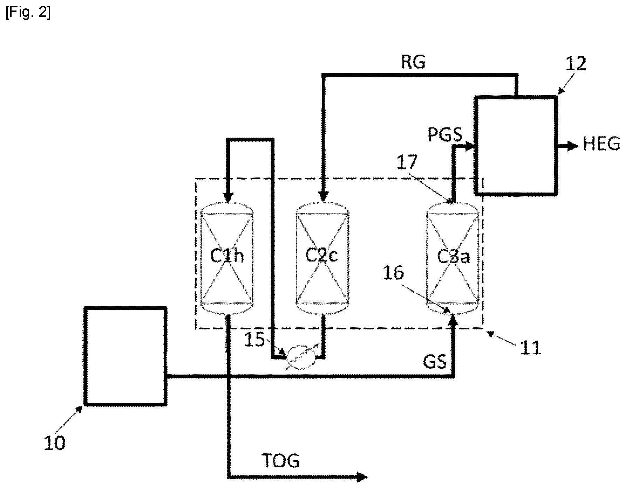

In figure 2, we have the following configuration:
- column C3a operates in the adsorption phase A;
- columns C2c, C1h operate in a regeneration phase H, C.

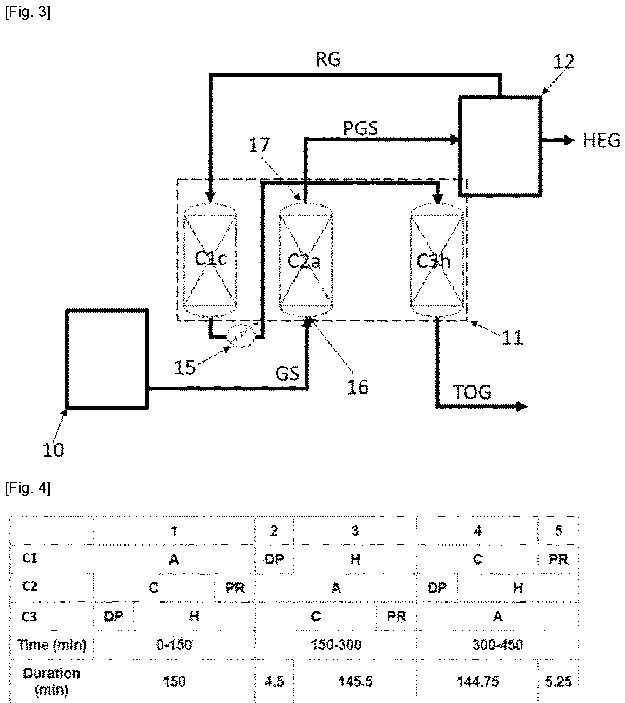

In figure 3, we have the following configuration:
- column C2a operates in the adsorption phase A;
- columns C1c, C3h operate in a regeneration phase H, C.

The cycle is represented through the configurations in Figure 1, Figure 2, and then Figure 3, with columns C1, C2, and C3 operating cyclically

In an embodiment, the gas stream GS is substantially saturated with water.

The purified gas stream PGS exiting the column C1a (or C2a or C3a) operating in the adsorption phase A is sent to a Pressure Swing Adsorption (PSA) unit 12 for hydrogen purification.

The regeneration gas RG comprises an off-gas from the PSA unit 12, containing nitrogen and hydrogen.

In one embodiment, the off-gas from the Pressure Swing Adsorption (PSA) unit 12 is produced within a pressure range of 1.45 to 1.55 bara. This allows overcoming the pressure drop in the Temperature Swing Adsorption (TSA) unit 11 with flowing of the regeneration gas RG through two columns in series.

In one embodiment, the regeneration gas RG flows through the two regenerating columns, for instance C3c, C2h in figure 1, without being split upstream of the upstream column C3c. In particular, the entire off-gas from the Pressure Swing Adsorption (PSA) unit 12 flows through the upstream column C3c, and subsequently, the entire off-gas from the PSA unit 12 flows through the downstream column C2h.

In an embodiment, the adsorption phase A operates at substantially 30bara and 40°C (to optimize the removal of ammonia and water).

The cooling phase C in the upstream column C3c is advantageously performed by the regeneration gas RG coming from a Pressure Swing Adsorption (PSA) unit 12 with a temperature significantly lower than the heating temperature of the Temperature Swing Adsorption (TSA) unit 11.

The heating phase H in the downstream column C2h is advantageously performed by the regeneration gas RG which has been heated by a heating device 15.

As shown on the table of figure 4, the cycle for a considered C1, C2, C3 column includes sequentially:
- the adsorption phase A (for instance at substantially 40°C and 30bara), where the gas stream GS is purified by removing ammonia (NH₃) and water (H₂O);
- a depressurization phase DP (for instance to lower the pressure to 1.5 bara to prepare for regeneration);
- the heating phase H (depending on the ammonia content of the feed between 180 and 390°C and 1.5 bara to ensure desorption of ammonia and water);
- the cooling phase C (for instance at substantially 40°C and 1.5 bara) to prepare the column for the next adsorption cycle;
- a repressurization phase PR (for instance at substantially 40°C and 30bara).

The table in figure 4 also shows the times and durations of each phase of the cycle.

The repressurization phase is performed in a co-current manner with the gas stream GS exiting the ammonia cracker 10, prior to the adsorption phase A.

In an embodiment, during said heating phase and said cooling phase the regeneration gas RG flow in a column is countercurrent to the flow of the gas stream GS during the adsorption phase A in said column.

This countercurrent flow ensures that impurities are efficiently pushed out of the adsorbent bed.

Co-current and countercurrent are defined with respect to the circulation of the gasses through a column in the adsorption phase A. Co-current is the same direction of circulation than the gasses through a column in the adsorption phase A and countercurrent is the opposite direction of circulation.

In an embodiment, the column in the heating phase H is completely regenerated to remove all ammonia and water impurities.

Complete desorption, typically in the heating phase, prevents carryover of ammonia from an upstream not completely regenerated column in a cooling phase to a downstream column in a heating phase, through the regeneration gas RG. Any residual ammonia in the adsorbent could otherwise end up in the production end of a column in the heating phase and then in the cooling phase and hence potentially contaminate the purified gas stream PGS during the next adsorption phase A.

During the adsorption phase A, the adsorbent gradually saturates with ammonia and water. When the adsorbent reaches its maximum saturation capacity, breakthrough occurs, potentially leading to contamination of the gas stream.The maximum saturation capacity depends on the temperature and on the partial pressure of ammonia in the feed stream.

If breakthrough occurs, ammonia may enter the downstream PSA unit 12, which must be avoided.

In an embodiment, to prevent ammonia carryover into the PSA unit 12, adsorption in the column is stopped before breakthrough occurs.

The PSA off-gas, mainly nitrogen with potentially a small proportion of hydrogen, must remain free of ammonia, as regeneration gas returning to the TSA unit 11.

In an embodiment, the purified gas stream PGS exiting the column operating in the adsorption phase A comprises up to 0.1ppm of ammonia.

The columns C1, C2, C3 have a radial centripetal or centrifugal configuration.

Each column C1, C2, C3 comprises an adsorbent bed with at least two layers of adsorbent.

In an embodiment, the adsorbent layers comprise:
- a first layer of activated alumina for water removal; and
- a second layer of zeolite for ammonia removal.

Each column C1, C2, C3 comprises a feed end 16 arranged for receiving said gas stream GS, a product end 17 downstream said feed end 16 for discharging the purified gas stream PGS from the column, and an adsorbent bed arranged between said feed end 16 and said product end 17, the adsorbent bed comprising the first layer followed downstream by the second layer.

The columns may, depending on each case, have a vertical or horizontal central axis, or may be of the radial type, that is, the gas stream GS to be purified flows therein either vertically (for instance in downflow), or horizontally (from left to right, or vice versa) or centripetally (radially toward the adsorber central axis) or centrifugally (radially from the central axis).

In an embodiment, the PSA unit 12 separates the purified gas stream PGS for producing a hydrogen enriched gas HEG and said PSA off-gas.

The hydrogen enriched gas HEG exiting the PSA unit 12 is in particular a pure hydrogen stream of >99.99%.

In an embodiment, the regeneration gas exiting the TSA unit 11 (TSA off-gas TOG), rich in ammonia, is recycled to the ammonia cracker 10 to enhance the ammonia reaction yield. Alternatively, this TSA off-gas TOG is valorized as fuel by being directed to the furnace burners for the ammonia cracker 10.

In an embodiment, the regeneration phase releases impurities by heating the adsorbents to decrease their affinity for ammonia and water.

The regeneration gas RG is heated by a heating device 15 before entering the column operating the heating phase.

The heating device 15 is an electrical heater or a fuel gas heater.

In an embodiment, the columns are designed to handle a gas stream GS containing up to 3% ammonia.

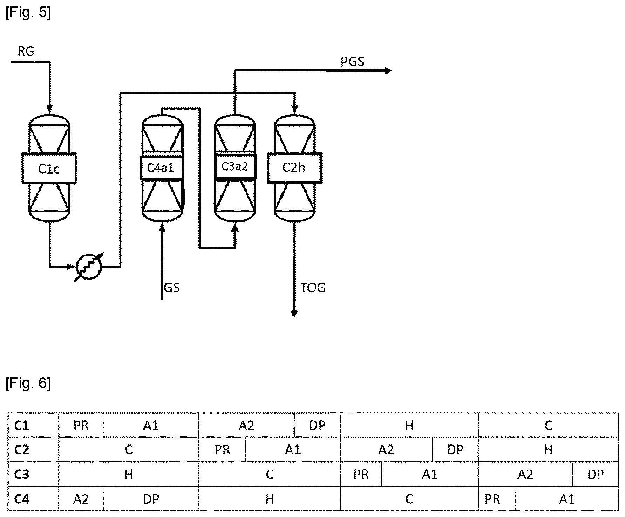

In another embodiment of the invention illustrated with reference to figures 5 and 6, the process utilizes a Temperature Swing Adsorption (TSA) unit comprising four columns C1, C2, C3, C4.

The operation is cyclical with two adsorption phases and regeneration phases in the columns, as described in the following:
o a column C4a1 performs a first adsorption A1, removing a portion of ammonia (NH□) and potentially water (H□O) from the gas stream (GS);
o a column C3a2 performs a second adsorption A2;
o two columns C1, C2 operate in a regeneration phase H, C (C1c and C2h in figure 5), with a regeneration gas RG flowing through said columns C.h, C.c in series to release ammonia (NH□) and potentially water (H□O) adsorbed during the adsorption phases A1 and A2; and
∘ operating the columns C1, C2, C3, C4 in a cyclic manner so that each column C1, C2, C3, C4 alternates between the adsorption phases A1 and A2 and the regeneration phase H, C.

In particular, the cycle for a considered column includes sequentially:
- the adsorption phases A1 and A2 , where the gas stream is purified by removing ammonia (NH□) and water (H□O);
- a depressurization phase DP (to prepare for regeneration);
- the heating phase;
- the cooling phase;
- a repressurization phase PR.

The adsorption may take place over a longer duration.

## Claims

1. A process for purifying a gas stream (GS) containing hydrogen, nitrogen, ammonia, and potentially water, in particular a gas stream exiting an ammonia cracker (10), comprising the following steps:
- passing the gas stream through a Temperature Swing Adsorption unit (11) comprising at least three columns (C1, C2, C3), wherein:
o at least one column operates in an adsorption phase (A) to remove ammonia and potentially water from the gas stream to produce a purified gas stream;
o at least two columns operate in a regeneration phase, with a regeneration gas flowing through said columns in series to release ammonia and potentially water adsorbed during the adsorption phase; and
- operating the columns (C1, C2, C3) in a cyclic manner so that each column alternates between the adsorption phase and the regeneration phase.

2. Process according to claim 1, wherein the at least two columns operating in the regeneration phase comprise an upstream column and a downstream column, and among which:
- the upstream column operating a cooling phase (C), for instance at substantially 40°C and 1.5 bara, to prepare the column for the next adsorption cycle, the cooling being performed by the regeneration gas;
- the downstream column operating a heating phase (H), for instance between 180 and 390°C and 1.5 bara, to ensure desorption of ammonia and water.

3. Process according to one of the preceding claims, wherein the purified gas stream (PGS) exiting the column operating in the adsorption phase is sent to a Pressure Swing Adsorption unit for hydrogen purification.

4. Process according to preceding claim, wherein the regeneration gas (GS) comprises an off-gas from the Pressure Swing Adsorption unit, said off-gas containing nitrogen and hydrogen.

5. Process according to preceding claim, wherein the off-gas from the Pressure Swing Adsorption unit is produced within a pressure range of 1.45 to 1.55 bara.

6. Process according to one of claims 3 to 5, wherein the PSA unit separates the purified gas stream (PGS) for producing a hydrogen enriched gas and said PSA off-gas.

7. Process according to one of the preceding claims, wherein the regeneration gas flow in a column is countercurrent to the flow of the gas stream during the adsorption phase in said column.

8. Process according to one of the preceding claims, wherein the columns have a radial centripetal or centrifugal configuration.

9. Process according to one of the preceding claims, wherein each column comprises an adsorbent bed with at least two layers of adsorbent.

10. Process according to preceding claim, wherein the adsorbent layers comprise:
- a first layer of activated alumina for water removal; and
- a second layer of zeolite for ammonia removal.

11. Process according to the preceding claim, wherein each column comprises a feed end arranged for receiving said gas stream, a product end downstream said feed end for discharging the purified gas stream from the column, and an adsorbent bed arranged between said feed end and said product end, the adsorbent bed comprising the first layer followed downstream by the second layer.

12. Process according to one of the preceding claims, wherein the regeneration gas exiting the Temperature Swing Adsorption unit is recycled to the ammonia cracker to enhance the ammonia reaction yield.

13. Process according to one of claims 1 to 11, wherein the regeneration gas exiting the Temperature Swing Adsorption unit is valorized as fuel by being directed to the furnace burners for supplying heat to the ammonia cracker.

14. Process according to one of the preceding claims in combination with claim 2, wherein the regeneration gas is heated by a heating device before entering the column operating the heating phase.

15. Process according to one of the preceding claims, wherein the cycle for a considered column includes sequentially:
- the adsorption phase (A), where the gas stream is purified by removing ammonia and water ;
- a depressurization phase (DP);
- the heating phase (H);
- the cooling phase (C);
- a repressurization phase (PR).
